# EUROPEAN PATENT APPLICATION

(11) **EP 4 328 830 A1**
(43) Date of publication of application: **28.02.2024**
(21) Application number: 23192720.3
(22) Date of filing: 22.08.2023
(51) Int. Cl.: G06Q 10/10, G06Q 50/02, H04L 67/52, H04W 4/02, H04W 4/021, H04W 4/029, H04W 40/20, H04W 64/00

(54) **METHOD FOR GENERATING A FISHING TRACK, MOBILE TERMINAL, AND STORAGE MEDIUM**

(30) Priority: 23.08.2022 CN 202211011346
(71) Applicant: Guangdong Coros Sports Technology Joint Stock Company, Dongguan, Guangdong 523808 (CN)
(72) Inventor: NIU, Haotian, DONGGUAN, GUANGDONG, 523808 (CN); TANG, Yu, DONGGUAN, GUANGDONG, 523808 (CN); LIU, Jingguang, DONGGUAN, GUANGDONG, 523808 (CN)
(74) Representative: Rapisardi, Mariacristina

(57) **Abstract**

Provided are a method for generating a fishing track, a mobile terminal, and a storage medium. The method includes the steps described below. A first position of a user and a second position of at least one fishing area are acquired. A target fishing area in which the user is located is determined from the at least one fishing area according to the first position and the second position. A fishing track is generated according to the first position and a third position of the target fishing area. Embodiments of the present application achieve automatic generation of the fishing track. This configuration assists a user to perform replays based on fishing tracks, which helps to improve the user's fishing skills.

## Description

### TECHNICAL FIELD

The present application relates to the technical field of computer applications and, in particular, a method for generating a fishing track, a mobile terminal, and a storage medium.

### BACKGROUND

Recreational fishing and competitive fishing are gaining in popularity as a sport. To improve the fishing ability in fishing activities, a fisherman needs to record a fishing trip and fishing data of each position in the trip to get a fishing track. Through analysis and a summary of the fishing trip and fishing track, fishing experience and lessons can be acquired, and personal fishing skills can be thus improved. By means of data-based analysis, personal fishing skills can be scientifically improved. Otherwise, simply relying on personal subjective impressions leads to continuous accumulation of wrong experience, which is not conducive to improving fishermen's fishing skills.

Currently, the preceding fishing track generally depends on the manual input from the fisherman and cannot be automatically generated. The input operation greatly affects the fishing experience of the fisherman. On the other hand, due to omissions in the manual input, the generated fishing track is often not accurate enough. As a result, the subsequent summary and analysis cannot correctly reflect the actual state of the fisherman and thus cannot really assist the fisherman to improve his fishing ability.

### SUMMARY

The present application provides a method for generating a fishing track, an electronic device, and a storage medium to achieve automatic generation of a fishing track. In this manner, the fishing trip of a fisherman can be accurately marked and the reliability of fishing data is improved so as to assist a user to improve fishing skills.

According to an aspect of the present application, a method for generating a fishing track is provided. The method includes the steps below.

A first position of a user and a second position of at least one fishing area are acquired.

A target fishing area in which the user is located is determined from the at least one fishing area according to the first position and the second position.

A fishing track is generated according to the first position and a third position of the target fishing area.

According to another aspect of the present application, a mobile terminal is provided. The mobile terminal includes at least one processor and a memory communicatively connected to the at least one processor.

The memory stores a computer program executable by the at least one processor. The computer program is executed by the at least one processor to cause the at least one processor to perform the method for generating a fishing track of any one of the embodiments of the present application.

According to another aspect of the present application, a computer-readable storage medium is provided that is configured to store computer instructions that, when executed by a processor, carry out the method for generating a fishing track of any one of the embodiments of the present application.

In the technical solutions of embodiments of the present application, a first position of a user and a second position of at least one fishing area are acquired, a target fishing area in which the user is located is determined from fishing areas according to the first position and the second position, and a fishing track is generated according to the first position and a third position of the target fishing area. In embodiments of the present application, a fishing track is generated by a user's first position and the second position in the target fishing area, and the fishing track is automatically generated. This configuration assists a user to perform replays based on fishing tracks, which helps to improve the user's fishing skills.

It is to be understood that the content described in this part is neither intended to identify key or important features of the embodiments of the present application nor intended to limit the scope of the present application. Other features of the present application are apparent from the description provided hereinafter.

### BRIEF DESCRIPTION OF DRAWINGS

To illustrate technical solutions in embodiments of the present application more clearly, drawings used in the description of the embodiments are briefly described below. Apparently, the drawings described below illustrate only part of the embodiments of the present application, and those of ordinary skill in the art may obtain other drawings based on the drawings described below on the premise that no creative work is done.
FIG. 1 is a flowchart of a method for generating a fishing track according to embodiments of the present application.
FIG. 2 is a flowchart of another method for generating a fishing track according to embodiments of the present application.
FIG. 3 is a flowchart of another method for generating a fishing track according to embodiments of the present application.
FIG. 4 is a flowchart of another method for generating a fishing track according to embodiments of the present application.
FIG. 5 is an example diagram of a fishing track according to embodiments of the present application.
FIG. 6 is an example diagram of a mobile terminal according to embodiments of the present application.

### DETAILED DESCRIPTION

For a better understanding of technical solutions in the present application by those skilled in the art, the technical solutions in embodiments of the present application is described clearly and completely in conjunction with the drawings in embodiments of the present application. Apparently, the embodiments described below are part, not all, of embodiments. Based on embodiments in the present application, all other embodiments obtained by those of ordinary skill in the art without creative work are within the protection scope of the present application.

It is to be noted that the terms such as "first" and "second" in the description, claims, and drawings of the present application are used to distinguish between similar objects and are not necessarily used to describe a particular order or sequence. It should be understood that data used in this manner is interchangeable when appropriate so that embodiments of the present application described herein can be implemented in a sequence not illustrated or described herein. In addition, terms "including" and "having" or any variations thereof are intended to encompass a non-exclusive inclusion. For example, a process, method, system, product, or device that includes a series of steps or units not only includes the expressly listed steps or units but may also include other steps or units that are not expressly listed or are inherent to such a process, method, product, or device.

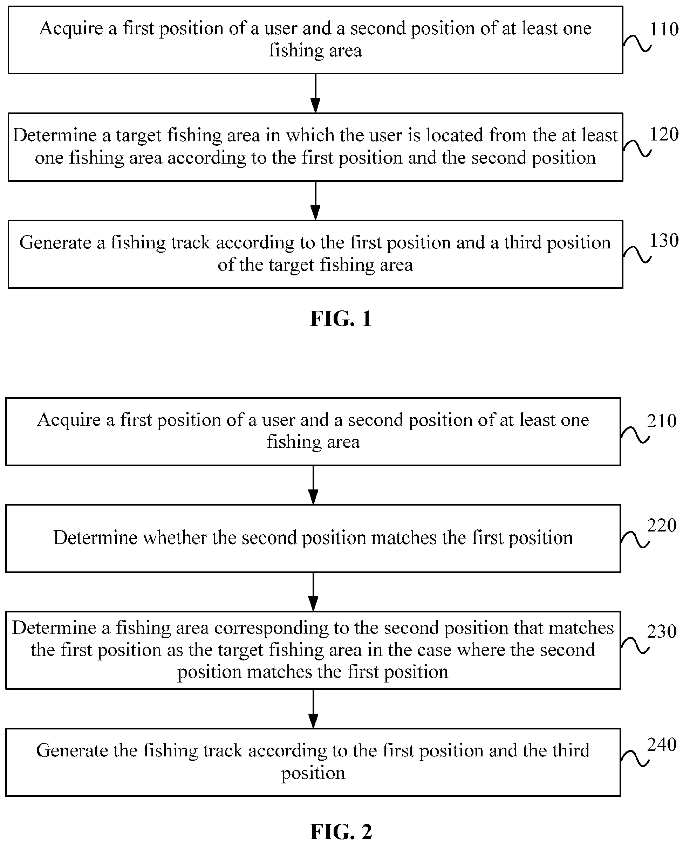

FIG. 1 is a flowchart of a method for generating a fishing track according to embodiments of the present application. This embodiment is applicable to a case where a fishing track is automatically generated. The method may be performed by a fishing track generating apparatus that may be implemented in the form of hardware and/or software. The apparatus may be configured in a mobile terminal or an intelligent wearable device. As shown in FIG. 1, the method includes the steps described below.

Step 110: A first position of a user and a second position of at least one fishing area are acquired.

The first position may be where the user is located and may be determined by a positioning apparatus of a mobile terminal or an intelligent wearable device used by the user. The first position may be a place name or a coordinate of longitude and latitude. The second position may be where the fishing area is located and may be stored on a local or remote server.

In this embodiment of the present application, the position of the user may be collected and used as the first position.

In an example embodiment, a Global Positioning System (GPS) may be used to determine the first position of the user. Moreover, a communication base station may be used to determine the first position of the user. It can be understood that the first position may be collected by a timing or different timings. The number of acquired first positions may be one or more.

In this embodiment, a position where at least one fishing area is located may be collected as the second position.

In an example embodiment, the second position of the at least one fishing area stored locally may be invoked. Alternatively, the second position of the at least one fishing area stored in the remote server may be downloaded from the remote server via the Internet. It can be understood that the second position may be collected in real time or in advance. The number of acquired second positions may be one or more.

Step 120: A target fishing area in which the user is located is determined from the at least one fishing area according to the first position and the second position.

The target fishing area may be obtained by a selection of the user's first position and the second position of the fishing area. It can be understood that the target fishing area may be one of the at least one fishing area.

Specifically, a target fishing area of the user may be determined from the acquired first positions. The target fishing area may be a fishing area where the user is located. The second position corresponding to the target fishing area may be recorded as a third position.

Step 130: The fishing track is generated according to the first position and a third position of the target fishing area.

In this embodiment of the present application, a fishing track may be generated according to the connection between the collected first position and the third position. In an embodiment, the first position and the third position are sequentially connected as a fishing track according to the position information. The first position and the third position in the fishing track may be identified differently.

In this embodiment of the present application, a first position of a user is acquired, a third position of a target fishing area is determined according to the first position, and a fishing track is generated according to the first position and the third position. In this embodiment of the present application, a fishing track is generated by the first position of the user and the third position of the target fishing area, thereby achieving automatic generation of the fishing track. This configuration assists a user to perform replays based on fishing tracks, which helps to improve the user's fishing skills.

In some embodiments, the method provided by this embodiment of the present application also includes detecting an operation instruction of the user. Accordingly, acquiring the first position of the user includes the step described below.

The mobile terminal is controlled to acquire the first position according to the operation instruction of the user.

The operation instruction may be an instruction for the user to operate the mobile terminal. For example, the operation instruction may include a sliding operation, a click operation, a touch operation, and a gesture operation. The operation instruction may be received by the mobile terminal in a manner including, but not limited to, receiving through a sensor and receiving through a touch screen.

In this embodiment of the present application, the user may issue an operation instruction to the mobile terminal to control the mobile terminal. The mobile terminal, after acquiring the operation instruction, may acquire the first position of the user. For example, the mobile terminal, when receiving the operation instruction, may determine the first position of the user by positioning of the communication base station. Alternatively, the mobile terminal, after receiving the operation instruction, may determine the first position of the user by a positioning apparatus.

In someother embodiments, the mobile terminal includes a positioning apparatus. Controlling the mobile terminal to acquire the first position according to the operation instruction of the user includes the steps described below.

The positioning apparatus is controlled to collect a fourth position of the mobile terminal according to the operation instruction of the user. The fourth position is determined as the first position.

The positioning apparatus may be a software/hardware apparatus for collecting a position of the mobile terminal in the space. The positioning apparatus may include one or more of a communication base station positioning apparatus, a global positioning system, a Beidou satellite positioning system, and a Galileo satellite navigation system.

In this embodiment of the present application, a positioning apparatus is configured in the mobile terminal. The positioning apparatus can collect the position of the mobile terminal in the space. The user may control the mobile terminal through an operation instruction. The mobile terminal, after receiving the operation instruction, may control the positioning apparatus configured in the mobile terminal to collect a fourth position in which the mobile terminal is located in space. The fourth position may be used as the first position, that is, the fourth position where the mobile terminal used by the user is located may be used as the first position of the user.

FIG. 2 is a flowchart of another method for generating a fishing track according to embodiments of the present application. This embodiment of the present application is based on the preceding embodiment of the present application. Referring to FIG. 2, the method provided in this embodiment of the present application specifically includes the steps described below.

Step 210: A first position of a user and a second position of at least one fishing area are acquired.

The second position may be an area for fishing.

In this embodiment of the present application, one or more fishing areas may be acquired. The fishing area may be used as the second position. In an embodiment, the second position may be generated by a user's setting as desired. In another embodiment, the second position may be generated by the mobile terminal according to the user's preference recommendations.

Step 220: Whether the second position matches the first position is determined.

Matching may mean that the first position and the second position are the same or close to each other. For example, the second position and the first position are geographically at the same location. Alternatively, for another example, the distance between the second position and the first position is less than a threshold.

Specifically, the acquired second position may be matched with the first position. The matching process may include comparing the spatial position coordinates of the second position with that of the first position or comparing the geographical name of the second position with that of the first position.

Step 230: A fishing area corresponding to the second position that matches the first position is determined as the target fishing area in the case where the second position matches the first position.

Some embodiments also include the step described below. The second position that matches the first position is determined as the third position in the case where the second position matches the first position.

In this embodiment of the present application, the second position that matches the first position may be used as the third position, that is, a fishing area corresponding to the second position that matches the first position may be used as the target fishing area.

Step 240: A fishing track is generated according to the first position and the third position.

In an example embodiment, the second position that matches the first position is determined as the third position in the case where the second position matches the first position.

In embodiments of the present invention, the second position may be determined as the third position when the second position matches the first position.

In an example embodiment, determining whether the second position matches the first position includes the steps described below.

Whether the second position coincides with the first position is determined according to the first position and the second position. That the second position matches the first position is determined in the case where the second position coincides with the first position.

In this embodiment of the present application, the manner of determining whether the fourth position matches the first position may be determined by the manner of determining whether the second position coincides with the first position. For example, the second position matches the first position if the position coordinate of the second position coincides with that of the first position.

In another example embodiment, the method provided by this embodiment of the present application also includes determining a distance between a second position and the first position based on the first position and the second position. Accordingly, determining whether the second position coincides with the first position includes the step described below.

That the second position coincides with the first position is determined in the case where the distance is less than or equal to a distance threshold.

The distance threshold may be the maximum distance value for determining whether the second position coincides with the first position. The distance threshold may be preset. The value of the minimum distance threshold may specifically include, for example, 1 meter, 2 meters, and 3 meters.

Specifically, after the second position is acquired, the distance between the second position and the first position can be determined. The second position and the first position may be multiple. The distance between each second position and each first position can be determined separately. Each determined distance may be compared with a preset distance threshold. It can be determined that the first position and the second position where the distance is generated coincide with each other when the distance is less than or equal to the distance threshold.

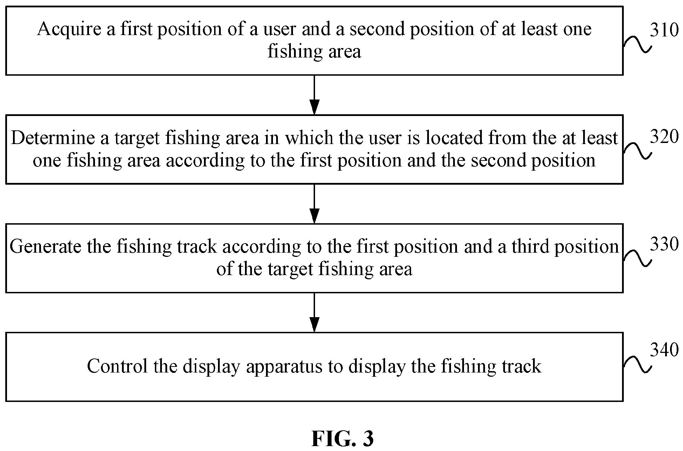

FIG. 3 is a flowchart of another method for generating a fishing track according to embodiments of the present application. This embodiment of the present application is based on the preceding embodiment of the present application. Referring to FIG. 3, the method provided in this embodiment of the present application specifically includes the steps described below.

Step 310: A first position of a user and a second position of at least one fishing area are acquired.

Step 320: A target fishing area in which the user is located is determined from the at least one fishing area according to the first position and the second position.

Step 330: The fishing track is generated according to the first position and a third position of the target fishing area.

Step 340: The display apparatus is controlled to display the fishing track.

The display apparatus may be a software apparatus and/or a hardware apparatus used for displaying information. The display apparatus may include a software display interface and a hardware display screen and may be applied to the mobile terminal.

In this embodiment of the present application, the fishing track, after being generated, may be displayed on the display screen of the mobile terminal.

In an example embodiment, the display apparatus may select a map for display according to the first position of the user and may superimpose the fishing track on the preceding map for display.

In another example embodiment, a configuration file related to the display of fishing tracks may be pre-stored in the mobile terminal. The configuration file may include a display pattern and a display position of the fishing tracks. When the display apparatus is controlled to display the fishing tracks, the pre-stored configuration file can be read to display the fishing tracks in an area corresponding to the display position in the display apparatus according to the display pattern.

In an embodiment, the fishing track includes a movement track composed of the first position, and the third position. Accordingly, controlling the display apparatus to display the fishing track includes the steps described below. The display apparatus is controlled to display the movement track in a first identification on a display interface and to display the third position in a second identification. The first identification is different from the second identification.

The movement track may be information identifying a user's motion track and may be generated by connection of the first positions. It can be understood that the movement track may be determined by at least two first positions. The first identification may be a display pattern of the movement track in the display apparatus. The second identification may be a display pattern displaying the second position in the display apparatus. The first identification and the second identification may include different display shapes and colors. For example, in some embodiments, the first identification may be a line and the second identification may be a cartoon avatar set by the user. In some other embodiments, the first identification may be a dotted line and the second identification may be a dynamic image. It can be understood that to distinguish the movement track and the third position in the display apparatus, the first identification of the movement track in the track may be different from the second identification of the second position. For example, the first identification may have the same shape as the second identification, but the display color is different. Alternatively, the first identification may have a different shape from the second identification.

In this embodiment of the present application, the mobile terminal can control the fishing track of the display apparatus on the display interface. The fishing track displays the movement track with a first identification and the second position with a second identification. The display interface can display pages by software. The display pages may be visual information displayed based on the hardware facilities of the display apparatus. The display pattern of the display interface can be generated by the mobile terminal according to the configuration file.

In another example embodiment, the method provided by this embodiment of the present application also includes the steps described below. Map data is acquired. The display apparatus is controlled to display the map data on the display interface. Accordingly, controlling the display apparatus to display the fishing track includes controlling the display apparatus to superimpose and display the fishing track on the map data.

The map data may be data for displaying a map in the display apparatus. The map data may be pre-stored in the mobile terminal or stored in a server having a communication connection with the mobile terminal.

In this embodiment of the present application, map data stored in the local or remote server of the mobile terminal can be acquired. The display apparatus may display the map data. Further, when displayed, the fishing track may be superimposed on an upper layer of the map data for display. The superimposition may mean that the fishing track corresponds to the map data according to geographical coordinates.

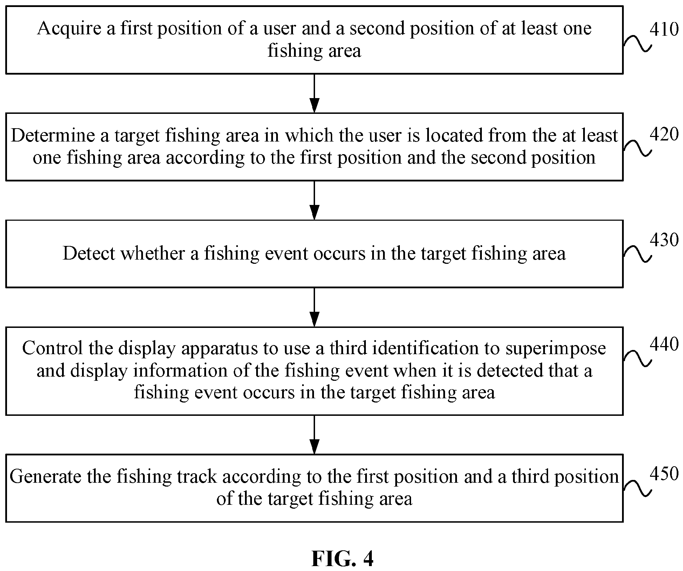

FIG. 4 is a flowchart of another method for generating a fishing track according to embodiments of the present application. This embodiment of the present application is based on the preceding embodiment of the present application. Referring to FIG. 4, the method provided in this embodiment of the present application specifically includes the steps described below.

Step 410: A first position of a user and a second position of at least one fishing area are acquired.

Step 420: A target fishing area in which the user is located is determined from the at least one fishing area according to the first position and the second position.

Step 430: Whether a fishing event occurs in the target fishing area is detected.

The fishing event may mean that the user fishes in the target fishing area and the event may be stored in the mobile terminal in the form of data.

In this embodiment of the present application, fishing detection can be performed in the target fishing area so as to determine whether the user is fishing in the target fishing area and thus a fishing event occurs.

Step 440: The display apparatus is controlled to use a third identification to display information of the fishing event when it is detected that a fishing event occurs in the target fishing area.

The third identification may be a display pattern displaying a fishing event in the display apparatus. The third identification may specifically include a static graphic or an animation.

Specifically, when a fishing event is detected in the target fishing area, the information of the fishing event can be displayed in the form of a third identification. The superimposed content may be displayed on the display apparatus. It can be understood that the superimposition of the information of the fishing event and the third identification may include displaying the information of the fishing event and the third identification in the same position in the display apparatus, or displaying a graph representing a corresponding relationship between the information of the fishing event and the third identification in the display apparatus. For example, a bubble diagram may be used.

Step 450: The fishing track is generated according to the first position and a third position of the target fishing area.

In an example embodiment, the information of the fishing event includes at least one of fishing start time, fishing duration, fishing end time, and a fishing position.

In this embodiment of the present application, at least one of the fishing start time, fishing duration, fishing end time, and a fishing position of the fishing event may be displayed on the display apparatus after being superimposed with the third identification.

In some embodiments, the user, as desired, may manually record other information through the user interface in the fishing area corresponding to the third identification. The recording method may include manual input. For example, the user may input the number of throwing poles and caught fish through a knob or the display apparatus. The user may also identify the fish caught area and the underwater topography of the fish caught area on the map according to the scale information on the map of the display apparatus.

In an embodiment, detecting whether a fishing event occurs in the target fishing area includes the steps described below.

Whether the user stays in the target fishing area within a preset period of time is detected.

That the fishing event occurs in the target fishing area is determined when it is detected that the user stays in the target fishing area within the preset period of time.

In this embodiment of the present application, the preset period of time may be a threshold of the period of time for detecting the user's fishing. The mobile terminal can detect the displacement of the user in the target fishing area and count the period of time. That the fishing event occurs in the target fishing area is determined when the displacement of the user within a preset period of time is detected to be less than or equal to a preset displacement threshold used to determine the occurrence of staying, that is, the user fishes in the target fishing area.

In an embodiment, detecting whether a fishing event occurs in the target fishing area includes the steps described below.

The displacement of the user is acquired when it is detected that the user is in the target fishing area.

That the fishing event occurs in the target fishing area is determined when the displacement of the user within a preset period of time is less than or equal to a preset displacement threshold.

The displacement threshold can be used to determine the maximum displacement value for the user to stay in the target fishing area.

Specifically, when the displacement of the user is less than the displacement threshold within a preset period of time, it can be determined that the user is in the staying state. In this case, it can be determined that a fishing event occurs in the target fishing area.

In another example embodiment, detecting whether a fishing event occurs in the target fishing area includes the steps described below.

An activity range of the user is acquired when it is detected that the user is in the target fishing area.

That the fishing event occurs in the target fishing area is determined when the activity range of the user within a preset period of time is less than a preset activity range.

The preset activity range may be the maximum activity range for determining whether the user stays in the target fishing area. If the activity range of the user exceeds the preset activity range, it is determined that the user does not stay in the target fishing area. If the activity range of the user does not exceed the preset activity range, it is determined that the user stays in the target fishing area.

Specifically, if the activity range of the user within a preset period of time is less than a preset activity range, it is determined that the user stays in the target fishing area, and therefore it can be determined that the fishing event occurs.

In another embodiment, this embodiment of the present application provides a method for generating a fishing track that can be applied to a smart wearable device, such as a smart watch. The user can choose to enter the fishing mode through the smart watch. After entering the fishing mode, the user selects target fishing water that may include a specific fishing ground, seafood, lake, river, or stream. After the target fishing water is selected, the smart watch turns on the global positioning to acquire the current position of the smart watch in real time. When the current position is within the target fishing water, the smart watch pushes a reminder to the user. The reminder method may include vibration, a graphic, a text, an audio, or a video. After the user reaches the target fishing area, the smart watch acquires the current position of the user in real time through the positioning apparatus, thereby recording the track information of the user. The track information may be reflected on the map at the current position. In other words, after the fishing mode is turned on, the processor of the smart watch pushes the map information to the display apparatus of the smart watch. The positioning apparatus, for example, a GPS, has a sampling frequency of 20 times per second. The acquired 20 times of geographical positions are correspondingly displayed on the map, and the 20 points are connected into a line to form a track.

Throughout the fishing process, the user's state can be divided into two types, namely, a fishing state and a moving state.

In a solution, when the processor detects that the change in the current position of the smart watch is less than or equal to a position change threshold, the clock module records the first time stamp and starts timing. When the accumulated time is greater than or equal to the time threshold, it is determined that the user is in the fishing state. The current position in the fishing state is connected to form a track, and the track is identified as a fishing area. The position change threshold may be 3 m, 2 m, or 1 m. The time threshold may be 20 seconds, 30 seconds, 1 minute, 3 minutes, or 5 minutes.

Moreover, identification methods for different fishing areas may be different. For example, different fishing areas may be identified by different shapes or different colors.

To prevent misjudgment due to the drift of the positioning signal of the positioning apparatus, the processor may configure a maximum position change threshold. When the position change between the current sampled position information and the last sampled position information is greater than the maximum position change threshold, the processor determines that the positioning signal is drifting at this time and deletes the currently sampled position information.

In another aspect, the user, as desired, may manually record other information through the user interface in the fishing area. The recording method may include manual input. The user interface includes a knob and a display apparatus. For example, the user may input the number of throwing poles and caught fish through the knob or the display apparatus. The user may also identify the fish caught area and the underwater topography of the fish caught area on the map according to the scale information on the map of the display apparatus.

When the processor detects that the change in the current position of the smart watch is greater than the position change threshold, or when the processor detects that the change in the current position of the smart watch is less than or equal to the position change threshold, but the cumulative period of time is less than the time threshold, it is determined that the user is in the moving state. The moving state is identified in a different manner from the fishing area. Different ways may include identifying different states by different lines. For example, the moving state is identified by a dotted line, and the fishing state is identified by a solid line.

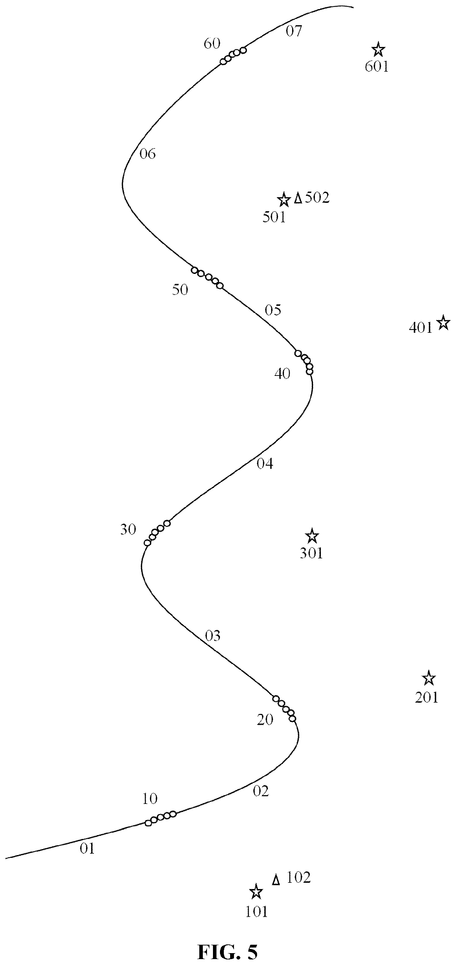

When the user is in the moving state, the positioning apparatus acquires the current position information in real time and reflects the current position information to a map of the display apparatus to form a track. Referring to FIG. 5, the fishing track includes non-fishing areas 01, 02, 03, 04, 05, 06, and 07. When detecting the occurrence of a fishing event, the processor determines the current position as the fishing area and automatically identifies the preceding fishing areas like 10, 20, 30, 40, 50, and 60 on the fishing track. The user may manually input fishing water through the user interface, see 101-601 in FIG. 5. Moreover, the user can also identify, by manual input, the underwater structure points, such as 101 and 501. The underwater structure points include the underwater mountain stones.

When the positioning information acquired by the positioning apparatus is not in the fishing area, or the user manually turns off the fishing mode, the recording of the fishing information is stopped.

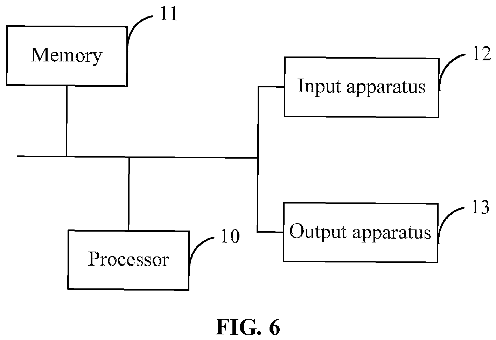

FIG. 6 is an example diagram of a mobile terminal according to embodiments of the present application. The mobile terminal includes a processor 10, a memory 11, an input apparatus 12, and an output apparatus 13. One or more processors 10 may be disposed in the mobile terminal and one processor 10 is taken as an example in FIG. 6. The processor 10, the memory 11, the input apparatus 12, and the output apparatus 13 in the mobile terminal may be connected by a bus or other manners. Connecting by a bus is used as an example in FIG. 6.

As a computer-readable storage medium, the memory 11 may be configured to store a software program, a computer executable program, and a module, for example, a module corresponding to the method for generating a fishing track in the embodiments of the present application. The processor 10 executes software programs, instructions, and modules stored in the memory 11 to perform function applications and data processing of the mobile terminal, that is, to implement the preceding method. The method includes the steps described below.

A first position of a user and a second position of at least one fishing area are acquired.

A target fishing area in which the user is located is determined from the at least one fishing area according to the first position and the second position.

A fishing track is generated according to the first position and a third position of the target fishing area.

In some embodiments, the method also includes the steps described below.

An operation instruction of the user is detected.

Acquiring the first position of the user includes controlling the mobile terminal to acquire the first position according to the operation instruction of the user.

In some other embodiments, the mobile terminal includes a positioning apparatus.

Controlling the mobile terminal to acquire the first position according to the operation instruction of the user includes the steps described below.

The positioning apparatus is controlled to collect a fourth position of the mobile terminal according to the operation instruction of the user.

The fourth position is determined as the first position.

In some other embodiments, determining a target fishing area in which the user is located from the at least one fishing area according to the first position and the second position includes the steps described below.

Whether the second position matches the first position is determined.

A fishing area corresponding to the second position that matches the first position is determined as the target fishing area in the case where the second position matches the first position.

Some embodiments also include the step described below. The second position that matches the first position is determined as the third position in the case where the second position matches the first position.

In some embodiments, determining whether the second position matches the first position includes the steps described below.

Whether the second position coincides with the first position is determined according to the first position and the second position.

That the second position matches the first position is determined in the case where the second position coincides with the first position.

In some embodiments, the method also includes the step described below. The distance between the second position and the first position is determined according to the first position and the second position.

Determining whether the second position coincides with the first position includes the step described below.

That the second position coincides with the first position is determined in the case where the distance is less than or equal to a distance threshold.

In some embodiments, the mobile terminal also includes a display apparatus. The method also includes controlling the display apparatus to display the fishing track.

In some embodiments, the fishing track includes a movement track composed of the first position, and the third position.

Controlling the display apparatus to display the fishing track includes controlling the display apparatus to display the movement track in a first identification on a display interface and to display the third position in a second identification,

The first identification is different from the second identification.

In some embodiments, the method also includes the steps described below.

Map data is acquired.

The display apparatus is controlled to display the map data on a display interface.

Controlling the display apparatus to display the fishing track includes controlling the display apparatus to superimpose and display the fishing track on the map data.

In some embodiments, the method also includes the steps described below.

Whether a fishing event occurs in the target fishing area is detected.

The display apparatus is controlled to use a third identification to display information of the fishing event when it is detected that a fishing event occurs in the target fishing area.

In some embodiments, the information of the fishing event includes at least one of fishing start time, fishing duration, fishing end time, and a fishing position.

In some embodiments, detecting whether a fishing event occurs in the target fishing area includes the steps described below.

Whether the user stays in the target fishing area within a preset period of time is detected.

That the fishing event occurs in the target fishing area is determined when it is detected that the user stays in the target fishing area within the preset period of time.

In some embodiments, detecting whether a fishing event occurs in the target fishing area includes the steps described below. The displacement of the user is acquired when it is detected that the user is in the target fishing area.

That the fishing event occurs in the target fishing area is determined when the displacement of the user within a preset period of time is less than or equal to a preset displacement threshold.

In some embodiments, detecting whether a fishing event occurs in the target fishing area includes the steps described below.

The displacement of the user is acquired when it is detected that the user is in the target fishing area. That the fishing event occurs in the target fishing area is determined when the activity range of the user within a preset period of time is less than a preset activity range.

The memory 11 may mainly include a program storage area and a data storage area. The program storage area may store an operating system and at least one application required for functions. The data storage area may store data and the like created according to the use of the mobile terminal. In addition, the memory 11 may include a high-speed random-access memory and may also include a non-volatile memory, for example, at least one disk memory element, flash memory element, or another non-volatile solid-state memory element. In some embodiments, the memory 11 may further include memories that are remotely disposed with respect to the processor 10. These remote memories may be connected to the mobile terminal through a network. Examples of the preceding network include, but are not limited to, the Internet, an intranet, a local area network, a mobile communication network, and a combination thereof.

The input apparatus 12 may be used for receiving inputted digital or character information and for generating key signal input related to user settings and function control of the mobile terminal. The output apparatus 13 may include a buzzer, a backlight, a vibration sensor, and other apparatuses. In some embodiments, the method also includes a display apparatus for displaying generated fishing tracks.

In an example embodiment, an apparatus for generating a fishing track is provided. The apparatus is a mobile terminal including a position acquisition module and a display module. The position acquisition module is for acquiring position information of a fishing trip. The display module is for displaying the generated fishing track based on the position information of the fishing trip acquired by the position acquisition module. The processor, connected to the position acquisition module and the display module, automatically detects the occurrence of the fishing event, determines the position of the fishing event, and automatically identifies the fishing area on the fishing track.

Further, on the basis of the preceding invention embodiments, the apparatus also includes at least one motion sensor for detecting acceleration information of the apparatus in real time. The processor, connected to the position acquisition module, the at least one motion sensor, and the display module, automatically detects the occurrence of the fishing event based on the acceleration information, determines the position of the fishing event, and automatically identifies the fishing area on the fishing track.

Further, on the basis of the preceding invention embodiments, the processor also detects the occurrence of a fishing event in real time based on the position and acceleration information, determines the position of the fishing event, and automatically identifies the fishing area on the fishing track.

Embodiments of the present application also provide a storage medium including computer-executable instructions which, when executed by a computer processor, are used for causing the computer processor to execute a method for generating a fishing track. The method includes the steps described below.

A first position of a user and a second position of at least one fishing area are acquired.

A target fishing area in which the user is located is determined from the at least one fishing area according to the first position and the second position.

A fishing track is generated according to the first position and a third position of the target fishing area.

In some embodiments, the method also includes the steps described below.

An operation instruction of the user is detected.

Acquiring the first position of the user includes controlling the mobile terminal to acquire the first position according to the operation instruction of the user.

In some other embodiments, the mobile terminal includes a positioning apparatus.

Controlling the mobile terminal to acquire the first position according to the operation instruction of the user includes the steps described below.

The positioning apparatus is controlled to collect a fourth position of the mobile terminal according to the operation instruction of the user.

The fourth position is determined as the first position.

In some other embodiments, determining a target fishing area in which the user is located from the at least one fishing area according to the first position and the second position includes the steps described below.

Whether the second position matches the first position is determined.

A fishing area corresponding to the second position that matches the first position is determined as the target fishing area in the case where the second position matches the first position.

Some embodiments also include the step described below. The second position that matches the first position is determined as the third position in the case where the second position matches the first position.

In some embodiments, determining whether the second position matches the first position includes the steps described below.

Whether the second position coincides with the first position is determined according to the first position and the second position.

That the second position matches the first position is determined in the case where the second position coincides with the first position.

In some embodiments, the method also includes the step described below. The distance between the second position and the first position is determined according to the first position and the second position.

Determining whether the second position coincides with the first position includes the step described below.

That the second position coincides with the first position is determined in the case where the distance is less than or equal to a distance threshold.

In some embodiments, the mobile terminal also includes a display apparatus. The method also includes controlling the display apparatus to display the fishing track.

In some embodiments, the fishing track includes a movement track composed of the first position, and the third position.

Controlling the display apparatus to display the fishing track includes controlling the display apparatus to display the movement track in a first identification on a display interface and to display the third position in a second identification,

The first identification is different from the second identification.

In some embodiments, the method also includes the steps described below.

Map data is acquired.

The display apparatus is controlled to display the map data on a display interface.

Controlling the display apparatus to display the fishing track includes controlling the display apparatus to superimpose and display the fishing track on the map data.

In some embodiments, the method also includes the steps described below.

Whether a fishing event occurs in the target fishing area is detected.

The display apparatus is controlled to use a third identification to display information of the fishing event when it is detected that a fishing event occurs in the target fishing area.

In some embodiments, the information of the fishing event includes at least one of fishing start time, fishing duration, fishing end time, and a fishing position.

In some embodiments, detecting whether a fishing event occurs in the target fishing area includes the steps described below.

Whether the user stays in the target fishing area within a preset period of time is detected.

That the fishing event occurs in the target fishing area is determined when it is detected that the user stays in the target fishing area within the preset period of time.

In some embodiments, detecting whether a fishing event occurs in the target fishing area includes the steps described below. The displacement of the user is acquired when it is detected that the user is in the target fishing area.

That the fishing event occurs in the target fishing area is determined when the displacement of the user within a preset period of time is less than or equal to a preset displacement threshold.

In some embodiments, detecting whether a fishing event occurs in the target fishing area includes the steps described below.

The activity range of the user is acquired when it is detected that the user is in the target fishing area. That the fishing event occurs in the target fishing area is determined when the activity range of the user within a preset period of time is less than a preset activity range.

From the preceding description of embodiments, it is apparent to those skilled in the art that the present application may be implemented by means of software and necessary general-purpose hardware or may of course be implemented by hardware, but in many cases, the former is a preferred embodiment. Based on this understanding, the technical solutions of the present application substantially, or the part contributing to the related art, may be embodied in the form of a software product. The computer software product may be stored in a computer-readable storage medium, such as a computer floppy disk, a read-only memory (ROM), a random-access memory (RAM), a flash, a hard disk, or an optical disk and includes several instructions for causing a computer device (which may be a personal computer, a server, or a network device) to execute the methods described in the embodiments of the present application.

It is to be noted that units and modules included in the embodiments of the apparatus are just divided according to functional logic but are not limited to such division, as long as the corresponding functions can be implemented. In addition, the specific names of the functional units are just used for distinguishing between each other and are not intended to limit the scope of the present application.

It is to be understood by those of ordinary skill in the art that some or all steps of the preceding method and function modules/units in the preceding system or device may be implemented as software, firmware, hardware, and suitable combinations thereof.

In the hardware implementation, division of the functional modules/units mentioned in the preceding description may not correspond to division of physical components. For example, one physical component may have several functions, or one function or step may be executed jointly by several physical components. Some or all physical components may be implemented as software executed by a processor, such as a central processing unit, a digital signal processor, or a microprocessor, may be implemented as hardware, or may be implemented as integrated circuits, such as application-specific integrated circuits. Such software may be distributed on a computer-readable medium that may include a computer storage medium (or a non-transitory medium) and a communication medium (or a transitory medium). As is known to those skilled in the art, the term, computer storage medium, includes volatile and nonvolatile, removable and non-removable media implemented in any method or technology for storing information (such as computer-readable instructions, data structures, program modules, or other data). The computer storage medium includes, but is not limited to, a random access memory (RAM), a read-only memory (ROM), an electrically erasable programmable read-only memory (EEPROM), a flash memory, or other memory technologies, a compact disc-read only memory (CD-ROM), a digital versatile disc (DVD) or other optical disc storage, a magnetic cassette, a magnetic tape, a magnetic disk storage, or other magnetic storage apparatuses, or any other media used for storing desired information and accessed by a computer. In addition, as is known to those skilled in the art, the communication media generally include computer-readable instructions, data structures, program modules, or other data in modulated data signals such as carriers or other transmission mechanisms and may include any information delivery media.

Herein various embodiments of the systems and techniques described above may be performed in digital electronic circuitry, integrated circuitry, field-programmable gate arrays

(FPGAs), application-specific integrated circuits (ASICs), application-specific standard products (ASSPs), systems on chips (SOCs), complex programmable logic devices (CPLDs), computer hardware, firmware, software, and/or combinations thereof. The various embodiments may include implementations in one or more computer programs. The one or more computer programs are executable and/or interpretable on a programmable system including at least one programmable processor. The programmable processor may be a special-purpose or general-purpose programmable processor for receiving data and instructions from a memory system, at least one input apparatus, and at least one output apparatus and transmitting data and instructions to the memory system, the at least one input apparatus, and the at least one output apparatus.

The computer program for implementation of the method of the present application may be written in any combination of one or more programming languages. The computer program may be provided for the processor of a general-purpose computer, a special-purpose computer, or another programmable data processing apparatus to enable functions/operations specified in flowcharts and/or block diagrams to be implemented when the computer program is executed by the processor. The computer program may be executed entirely on a machine, partly on a machine, as a stand-alone software package partly on a machine and partly on a remote machine, or entirely on a remote machine or a server.

In the context of the present application, a computer-readable storage medium may be a tangible medium that may contain or store a computer program that is used by or in conjunction with a system, apparatus, or device that executes instructions. The computer-readable medium may include, but is not limited to, an electronic, magnetic, optical, electromagnetic, infrared, or semiconductor system, apparatus, or device, or any suitable combination thereof. Alternatively, the computer-readable storage medium may be a machine-readable signal medium. More specific examples of the machine-readable storage medium may include an electrical connection based on one or more wires, a portable computer disk, a hard disk, a random-access memory (RAM), a read-only memory (ROM), an erasable programmable read-only memory (EPROM) or a flash memory, an optical fiber, a portable compact disc read-only memory (CD-ROM), an optical storage device, a magnetic storage device, or any suitable combination thereof.

In order that interaction with a user is provided, the systems and techniques described herein may be implemented on an electronic device. The electronic device has a display apparatus (for example, a cathode-ray tube (CRT) or a liquid-crystal display (LCD) monitor) for displaying information to the user and a keyboard and a pointing apparatus (for example, a mouse or a trackball) through which the user can provide input to the electronic device. Other types of apparatuses may also be used for providing interaction with a user. For example, feedback provided for the user may be sensory feedback in any form (for example, visual feedback, auditory feedback, or haptic feedback). Moreover, input from the user may be received in any form (including acoustic input, voice input, or haptic input).

The systems and techniques described herein may be implemented in a computing system including a back-end component (for example, a data server), a computing system including a middleware component (for example, an application server), a computing system including a front-end component (for example, a client computer having a graphical user interface or a web browser through which a user can interact with implementations of the systems and techniques described herein), or a computing system including any combination of such back-end, middleware or front-end components. Components of a system may be interconnected by any form or medium of digital data communication (for example, a communication network). Examples of the communication network include a local area network (LAN), a wide area network (WAN), a blockchain network, and the Internet.

A computing system may include a client and a server. The client and the server are usually far away from each other and generally interact through the communication network. The relationship between the client and the server arises by virtue of computer programs running on respective computers and having a client-server relationship to each other. The server may be a cloud server, also referred to as a cloud computing server or a cloud host. As a host product in a cloud computing service system, the server solves the defects of difficult management and weak service scalability in a related physical host and a related VPS service.

It is to be understood that various forms of the preceding flows may be used with steps reordered, added, or removed. For example, the steps described in the present application may be executed in parallel, in sequence, or in a different order as long as the desired results of the technical solutions in the present application are achieved. The execution sequence of these steps is not limited herein.

The scope of the present application is not limited to the preceding embodiments. It is to be understood by those skilled in the art that various modifications, combinations, subcombinations, and substitutions may be made according to design requirements and other factors. Any modifications, equivalent substitutions, improvements, and the like made within the spirit and principle of the present application are within the scope of the present application.

## Claims

1. A method for generating a fishing track, wherein the method is used for a mobile terminal and comprises:
acquiring (110) a first position of a user and a second position of at least one fishing area;
determining (120) a target fishing area in which the user is located from the at least one fishing area according to the first position and the second position; and
generating (130) a fishing track according to the first position and a third position of the target fishing area.

2. The method of claim 1, wherein determining (120) the target fishing area in which the user is located from the at least one fishing area according to the first position and the second position, comprises:
determining (220) whether the second position matches the first position; and
determining (230) a fishing area corresponding to the second position that matches the first position as the target fishing area in a case where the second position matches the first position.

3. The method of claim 2, further comprising: determining the second position that matches the first position as the third position in a case where the second position matches the first position.

4. The method of claim 2, wherein
determining (220) whether the second position matches the first position, comprises:
determining whether the second position coincides with the first position according to the first position and the second position; and
determining that the second position matches the first position in a case where the second position coincides with the first position;

5. The method of claim 4, further comprising: determining a distance between the second position and the first position according to the first position and the second position,
wherein determining whether the second position coincides with the first position, comprises:
determining that the second position coincides with the first position in a case where the distance is less than or equal to a distance threshold.

6. The method of claim 1, wherein the mobile terminal further comprises a display apparatus, and the method further comprises:
controlling the display apparatus to display the fishing track.

7. The method of claim 6, wherein the fishing track comprises a movement track composed of the first position, and the second position,
wherein controlling the display apparatus to display the fishing track, comprises: controlling the display apparatus to display the movement track in a first identification on a display interface and to display the second position in a second identification,
wherein the first identification is different from the second identification.

8. The method of claim 6, further comprising:
acquiring map data; and
controlling the display apparatus to display the map data on a display interface,
wherein controlling the display apparatus to display the fishing track, comprises:
controlling the display apparatus to superimpose and display the fishing track on the map data.

9. The method of claim 6, further comprising:
detecting whether a fishing event occurs in the target fishing area; and
controlling the display apparatus to use a third identification to display information of the fishing event when it is detected that a fishing event occurs in the target fishing area.

10. The method of claim 9, wherein the information of the fishing event comprises at least one of:
fishing start time, fishing duration, fishing end time, and a fishing position.

11. The method of claim 9, wherein detecting whether the fishing event occurs in the target fishing area, comprises:
detecting whether the user stays in the target fishing area within a preset period of time; and
determining that the fishing event occurs in the target fishing area when it is detected that the user stays in the target fishing area within the preset period of time.

12. The method of claim 10, further comprising:
acquiring a displacement of the user when it is detected that the user is in the fishing area; and
determining that the fishing event occurs in the target fishing area when the displacement of the user within a preset period of time is less than or equal to a preset displacement threshold.

13. The method of claim 9, wherein detecting whether the fishing event occurs in the target fishing area, comprises:
acquiring an activity range of the user when it is detected that the user is in the fishing area; and
determining that the fishing event occurs in the target fishing area when the activity range of the user within a preset period of time is less than a preset activity range.

14. A mobile terminal, comprising:
at least one processor (10); and
at least one memory (11), wherein
the memory (11) stores a computer program executable by the at least one processor (10), and the computer program is executed by the at least one processor (10) to cause the mobile terminal to perform the method of any one of claims 1 to 13.

15. A computer-readable storage medium, which is configured to store computer instructions for carrying out the method of any one of claims 1 to 13.
